Europäisches Patentamt

European Patent Office

Office européen des brevets

(11) Veröffentlichungsnummer: **0 381 039**
**A1**

## (12) EUROPÄISCHE PATENTANMELDUNG

(21) Anmeldenummer: **90101438.1**

(22) Anmeldetag: **25.01.90**

(51) Int. Cl.⁵: **A61C 17/16, F04B 9/02**

(30) Priorität: **02.02.89 DE 3903081**

(43) Veröffentlichungstag der Anmeldung:
**08.08.90 Patentblatt 90/32**

(84) Benannte Vertragsstaaten:
**AT BE CH DE ES FR GB GR IT LI LU NL SE**

(71) Anmelder: **Elektro-Wärme-Technik Siegfried Petz, Inh. Günter Petz**
**Flachslander Strasse 8**
**D-8500 Nürnberg(DE)**

(72) Erfinder: **Petz, Günter**
**Flachslanderstrasse 8**
**D-8500 Nürnberg(DE)**

(74) Vertreter: **Göbel, Matthias, Dipl.-Ing.**
**Pruppacher Hauptstrasse 5-7**
**D-8501 Pyrbaum-Pruppach(DE)**

(54) **Kolbenpumpe für Mundduschen.**

(57) Bei einer Kolbenpumpe für Mundduschen, deren Kolben über ein Untersetzungsgetriebe und einen Exzentertrieb in einem am Pumpengehäuse angeordneten Zylinder mit Zu-und Abläufen für das Pumpenmedium verschiebbar ist, weist zu einem dauerhaft dichten Zusammenwirken von Zylinderwandung und Kolben, der Zylinder (4) mit radialem Abstand innen eine über eine Teillänge desselben sich erstreckende dünnwandige Hülse (8) auf, die mit dem dem Exzentertrieb zugewandten Ende dicht mit dem Zylinder (4) fest verbunden ist und mit der inneren Umfangsfläche die Zylinderwandung für den Pumpenkolben (13) bildet.

Fig.1

## Kolbenpumpe für Mundduschen

Die Erfindung betrifft eine Kolbenpumpe für Mundduschen, deren Kolben über ein Untersetzungsgetriebe und einen Exzentertrieb in einem am Pumpengehäuse angeordneten Zylinder mit Zu- und Abläufen für das Pumpenmedium verschiebbar ist.

Es ist bekannt den Pumpenzylinder einstückig mit dem Pumpengehäuse auszubilden. Hierdurch ergibt sich, daß der Pumpenzylinder entsprechend dem verwendeten Werkstoff weitgehend starr ist, wodurch sich infolge Anpassungsschwierigkeiten zwischen Pumpenkolben und Zylinder vielfach Undichtheiten und Leckverluste an Pumpenmedium einstellen. Auch die Anordnung von Dichtlippen am Pumpenkolben konnte keine oder nur eine geringe Abhilfe schaffen. Schließlich führen auch Ungenauigkeiten beim Ausformvorgang, rauhe Zylinderwandflächen oder mechanischer Abrieb zwischen Pumpenkolben und Zylinder zu zusätzlichen Undichtheiten.

Die Erfindung hat zur Aufgabe, bei Kolbenpumpen für Mundduschen ein dauerhaft dichtes Zusammenwirken von Zylinderwandung und Kolben zu schaffen.

Erfindungsgemäß ist hierzu vorgesehen, daß der Zylinder mit radialem Abstand innen eine über eine Teillänge desselben sich erstreckende dünnwandige Hülse aufnimmt, die mit dem dem Exzentertrieb zugewandten Ende dicht mit dem Zylinder fest verbunden ist und mit der inneren Umfangsfläche die Zylinderwandung für den Pumpenkolben bildet. Auf diese Weise ist erreicht, daß der Pumpenkolben in einem weitgehend flexiblen Zylinderabschnitt bewegbar ist und daß sich der vor dem Pumpenkolben wirksame Pumpendruck auch im lichten Zwischenraum von Hülse und Zylinder einstellt, unter dessen Einfluß die Hülse dicht an den Pumpenkolben angelegt und gehalten wird. Die so gewissermaßen schwimmend geführten Pumpenkolben und Hülsen bilden auch bei langer Benutzung einen dichten Abschluß, wodurch Leckverluste an Pumpenmedium vermieden sind. Außerdem führt die pressende Anlage der Hülse an dem Pumpenkolben bei etwa vorhandenen Materialeinsenkungen oder Riefen zu einer Minderung der hieraus gegebenenfalls möglichen Leckverluste. Außerdem gibt die Hülse die Voraussetzung zu einer dichten Anpassung der Zylinderlauffläche an einen unrunden Pumpenkolben.

In Ausgestaltung der Kolbenpumpe ist vorgesehen, daß die Hülse an dem der Verbindungsstelle mit dem Zylinder zugenäherten Ende außen eine dem lichten Abstand von Hülse und Zylinder bestimmende umlaufende Wulst aufweist, an die sich an dem der gemeinsamen Verbindungsstelle zugewandten Ende außen ein radialer Stützbund anschließt. Durch entsprechende radiale Ausdehnung der Wulst ist die lichte Weite des Ringraumes zwischen Hülse und Zylinder bestimmbar. Zur Fixierung der Hülse an dem am Pumpengehäuse angeformten starren Zylinder kann der Stützbund pressend an das freie Ende des Zylinders, z. B. mittels eines Haltegliedes angelegt und mit dem Zylinder fest verbunden sein. Es versteht sich, daß beliebige Halteglieder, z. B. ein mit dem Zylinder verschraubbarer Klemmring, Anwendung finden können. Es ist auch denkbar, die Hülse in jeder anderen Weise, z. B. durch Klebung oder Polymerisation der gemeinsamen Trennungsflächen, mit dem Zylinder fest zu verbinden. Zweckmäßig ist in gemeinsamen Trennungsflächen von Hülse und Zylinder ein Dichtkörper, z. B. ein O-Ring oder ein ebener Dichtring aus einem flexiblen oder elastisch verformbaren Werkstoff eingelegt.

Eine einfache Herstellung der Hülse ist dadurch erreichbar, daß die Hülse einfach als Kunststoffformteil ausgebildet ist. Durch die Wahl eines geeigneten verschleißfesten Kunststoffes sind lange Laufzeiten für den Pumpenkolben erzielbar. Die Hülse kann auch durch einen Metallformteil gebildet sein, die bei entsprechend dünner Wandung unter dem Einfluß des im Ringraum zwischen Hülse und Zylinder wirksamen Pumpendruckes an den Pumpenkolben zur Schaffung einer dichten Wirkverbindung von Pumpenkolben und Hülse anpreßbar ist. Schließlich ist auch eine Hülse aus einem dünnwandigen gläsernen Werkstoff denkbar. Letztere zeichnet sich wegen ihrer glattwandigen inneren Umfangsfläche durch gute Laufeigenschaften für den Pumpenkolben aus.

Wie die Erfindung ausgeführt sein kann, zeigt das in der Zeichnung dargestellte Ausführungsbeispiel. Hierin bedeuten:

Fig. 1 eine Kolbenpumpe in Draufsicht, teilweise im Schnitt und

Fig. 2 ein Teilstück einer Kolbenpumpe schematisch im Schnitt, vergrößert.

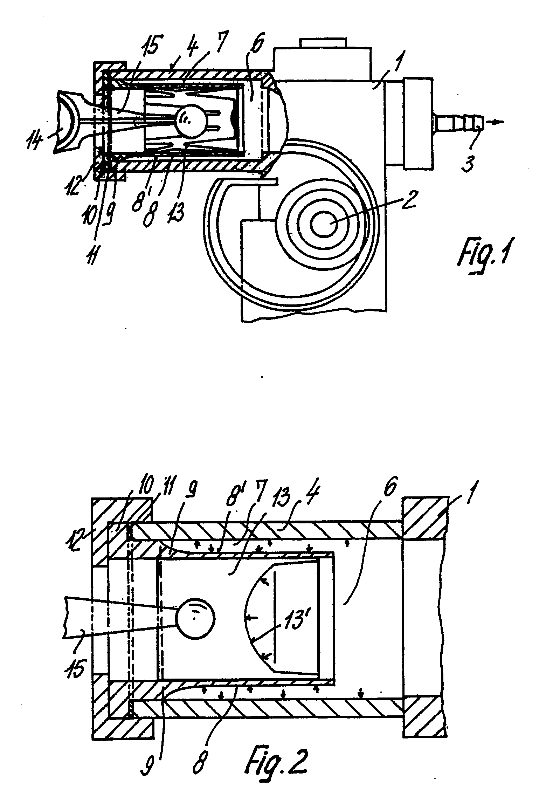

In Fig. 1 ist mit 1 das Gehäuse einer Kolbenpumpe bezeichnet, das einen Zulauf 2 und einen Ablauf 3 für das Pumpenmedium aufweist. Das Gehäuse 1 weist einen angeformten starren Zylinder 4 auf, der über eine Teillänge unter Bildung eines mit dem Druckraum 6 verbundenen Ringraumes 7 eine als Pumpenzylinder dienende Hülse 8 aufnimmt. Die Hülse 8 ist hierzu mit einer umlaufenden Wulst 9 an der inneren Umfangsfläche des Zylinders 4 abgestützt und vermittels eines Bundes 10 unter Zwischenfügung einer Dichtung 11 durch einen Haltering 12 am freien Ende des Zylinders 4 festgelegt. Die Wulst 9 bestimmt die lichte Weite des Ringraumes 7. Die Hülse 8 ist über ihre wesentliche, mit dem Pumpenkolben 13 wirksame Länge dünnwandig ausgeführt und bevorzugt aus einem Kunststoff gebildet. Der Pumpenkolben 13 ist in bekannter Weise über einen Exzentertrieb 14 und einen Pleuel 15 durch einen Motor (nicht gezeigt) verschiebbar.

Bei den Verschiebebewegungen des Pumpenkolbens 13 gelangt über den Zulauf 2 Pumpenmedium in das Pumpengehäuse 1 und beim jeweils nachfolgenden Druckhub des Pumpenkolbens 13 an den Ablauf 3. Über die Dauer des Druckhubs des Pumpenkolbens 13 wirkt das Pumpenmedium pressend auf die vordere Stirnfläche 13' des Pumpenkolbens 13 und weiter über den Ringraum 7 auf die äußere Umfangsfläche 8' der Hülse 8, wodurch diese infolge ihrer dünnwandigen Ausführung an den Pumpenkolben 13 pressend gehalten ist. Auf diese Weise wird eine dichte Wirkverbindung von Pumpenkolben 13 und Hülse 8 auch bei vorhandenen Unebenheiten, z. B. Riefen, Einfallstellen oder Abweichungen des Pumpenkolbens 13 von einer kreisrunden Querschnittsfläche, erreicht.

Es versteht sich, daß die Hülse 8 in beliebig anderer Weise am Zylinder 4 gehalten bzw. gestützt sein kann, so ist z. B. möglich auch das freie Ende der Hülse 8 etwa mittels eines gelochten Ringkörpers an dem Zylinder 4 abzustützen. Der vor dem Pumpenkolben 13 beim Druckhub wirksam werdende Druckaufbau gelangt dann über die Lochungen des Ringkörpers in den Ringraum 7 und weiter an die äußere Umfangsfläche der Hülse 8.

## Ansprüche

1. Kolbenpumpe für Mundduschen, deren Kolben über ein Untersetzungsgetriebe und einen Exzentertrieb in einem am Pumpengehäuse angeordneten Zylinder mit Zu- und Abläufen für das Pumpenmedium verschiebbar ist, dadurch gekennzeichnet, daß der Zylinder (4) mit radialem Abstand innen eine über eine Teillänge desselben sich erstreckende dünnwandige Hülse (8) aufnimmt, die mit dem dem Exzentertrieb zugewandten Ende dicht mit dem Zylinder (4) fest verbunden ist und mit der inneren Umfangsfläche die Zylinderwandung für den Pumpenkolben (13) bildet.

2. Kolbenpumpe nach Anspruch 1, dadurch gekennzeichnet, daß die Hülse (8) an dem der Verbindungsstelle mit dem Zylinder (4) zugenäherten Ende außen eine dem lichten Abstand zwischen Hülse (8) und Zylinder (4) bestimmende umlaufende Wulst (9) aufweist, an die sich an dem der Verbindungsstelle zugewandten Ende außen ein radialer Stützbund (10) anschließt.

3. Kolbenpumpe nach Anspruch 2, dadurch gekennzeichnet, daß die Hülse (8) mittels eines den Stützbund (10) pressend an dem freien Ende des Zylinders (4) anlegenden Haltegliedes mit dem Zylinder (4) fest verbindbar ist.

4. Kolbenpumpe nach Anspruch 2, dadurch gekennzeichnet, daß die Hülse (8) durch einen mit dem Zylinder (4) ver schraubbaren Klemmring mit dem Zylinder fest verbindbar ist.

5. Kolbenpumpe nach Anspruch 2, dadurch gekennzeichnet, daß die Hülse (8) durch Klebung oder Polymerisation der gemeinsamen Trennungsflächen mit dem Zylinder (4) fest verbindbar ist.

6. Kolbenpumpe nach Anspruch 1 und 2, dadurch gekennzeichnet, daß in den gemeinsamen Trennungsflächen von Hülse (8) und Zylinder (4) ein Dichtkörper (11), z. B. ein Dichtring eingelegt ist.

7. Kolbenpumpe nach Anspruch 1, dadurch gekennzeichnet, daß die Hülse (8) durch einen Kunststofformteil gebildet ist.

8. Kolbenpumpe nach Anspruch 1, dadurch gekennzeichnet, daß die Hülse (8) durch einen dünnwandigen Metallformteil gebildet ist.

9. Kolbenpumpe nach Anspruch 1, dadurch gekennzeichnet, daß die Hülse (8) durch einen dünnwandigen Formteil aus einem gläsernen Werkstoff gebildet ist.

Fig.1

Fig.2

| | **EINSCHLÄGIGE DOKUMENTE** | | | EP 90101438.1 |
|---|---|---|---|---|
| Kategorie | Kennzeichnung des Dokuments mit Angabe, soweit erforderlich, der maßgeblichen Teile | Betrifft Anspruch | | KLASSIFIKATION DER ANMELDUNG (Int Cl.5) |
| A | <u>DE - C - 704 568</u><br>(MAX POHLMANN UND DIPL.-ING. KONRAD GUND)<br>* Patentansprüche 1-4 *<br>-- | 1,6 | | A 61 C 17/16<br>F 04 B 9/02 |
| A | <u>DE - A1 - 2 714 876</u><br>(KUNO MOSER GMBH, FABRIK FÜR FEINMECHANIK UND ELEKTRO-TECHNIK)<br>* Patentanspruch 1 *<br>-- | 1 | | |
| A | <u>GB - A - 1 133 736</u><br>(AQUA TEC CORPORATION)<br>* Patentanspruch 1 *<br>-- | 1 | | |
| A | <u>GB - A - 2 076 496</u><br>(MATSUSHITA ELECTRIC WORKS LTD.)<br>* Zusammenfassung *<br>---- | 1 | | |
| | | | | **RECHERCHIERTE SACHGEBIETE (Int Cl.5)**<br><br>A 61 C<br>F 04 B |
| | Der vorliegende Recherchenbericht wurde für alle Patentansprüche erstellt. | | | |

| Recherchenort<br>WIEN | Abschlußdatum der Recherche<br>04-04-1990 | Prüfer<br>HEIN |
|---|---|---|